# FASCICULE DE BREVET EUROPEEN

(11) **EP 2 198 507 B1**
(45) Date de publication et mention de la délivrance du brevet: **18.01.2012**
(21) Numéro de dépôt: 08840156.7
(22) Date de dépôt: 10.10.2008
(51) Int. Cl.: H02M 5/293, H05B 39/04

(54) **DISPOSITIF DE COMMANDE VARIABLE**
VARIABLE STEUERUNG
VARIABLE CONTROL DEVICE

(30) Priorité: 16.10.2007 FR 0758338
(43) Date de publication de la demande: 23.06.2010
(73) Titulaire: Schneider Electric Industries SAS, 92500 Rueil-Malmaison (FR)
(72) Inventeur: CARCOUET, Sébastien, F-Vif (FR); ECRABEY, Jacques, F-07500 Guilherand Granges (FR)
(74) Mandataire: Dufresne, Thierry
(86) Numéro de dépôt international: PCT/EP2008/063661
(87) Numéro de publication internationale: WO 2009/050124

(56) Documents cités:
- US-A- 5 684 376
- US-A- 6 157 049
- MIHAILA A P ET AL: "SiC junction FETs - a state of the art review" SEMICONDUCTOR CONFERENCE, 2005. CAS 2005 PROCEEDINGS. 2005 INTERNATION AL SINAIA, ROMANIA 3-5 OCT. 2005, PISCATAWAY, NJ, USA,IEEE, US, vol. 2, 3 octobre 2005 (2005-10-03), pages 349-352, XP010863804 ISBN: 978-0-7803-9214-4

## Description

La présente invention se rapporte à un dispositif de commande variable chargé de commander une charge électrique avec une tension variable à partir d'un réseau électrique alternatif monophasé. L'invention trouve en particulier son application dans un gradateur ou variateur électronique (appelé également un "dimmer") destiné à pouvoir fournir une puissance variable notamment à des lampes, telles que des lampes à incandescence.

Un dimmer est alimenté en série avec la charge électrique à commander sur la phase d'un réseau électrique alternatif monophasé, lequel délivre généralement une tension alternative de 230 V. Un dimmer comporte habituellement des interrupteurs électroniques de puissance de type transistor MOSFET, en série avec la charge de façon à commuter l'alimentation de la charge en fonction d'un signal de commande arrivant sur la grille des transistors. Un avantage de ce type de transistor est d'être normalement ouvert, c'est-à-dire qu'en l'absence d'un signal de commande (en particulier à la mise sous tension) il reste à l'état bloqué et n'est pas passant. La commande de ces transistors se fait alors facilement par angle de phase comme pour des thyristors dans un variateur de vitesse, avec une possibilité supplémentaire qui est l'extinction de ces transistors à tout moment.

Néanmoins, le principal inconvénient de ces dimmers est la dissipation thermique générée par les transistors MOSFET à l'état passant. En effet, ceux-ci comportent une résistance importante à l'état passant, de l'ordre d'une centaine de milliohms. Cette dissipation thermique est pénalisante en terme de consommation électrique et aussi en terme de limitation de la miniaturisation d'un tel dimmer.

Il existe des interrupteurs électroniques de puissance à faible dissipation thermique, notamment des transistors à effet de champ de type JFET (Junction Field Effect Transistor). Leur résistance à l'état passant est en effet nettement inférieure à celle d'un transistor MOSFET de calibre équivalent. Cependant, ces transistors JFET sont de type normalement passant (appelé également "normally ON" ou normalement fermé), c'est-à-dire qu'ils sont à l'état passant lorsque leur tension Grille-Source V_{GS} est nulle (ou en présence d'un signal de commande nul). Il faut leur appliquer une tension Grille-Source V_{GS} négative suffisante pour qu'ils passent à l'état non-passant (ou ouvert). Cette caractéristique peut évidemment poser des problèmes de fonctionnement et des problèmes de sécurité.

Actuellement, les transistors JFET de type normalement passant sont habituellement en carbure de silicium (SiC), mais on pourrait aussi utiliser tout matériau à grande énergie de bande interdite (appelé également matériau à grand gap ou "wide-band gap material"), c'est-à-dire présentant une faible résistance à l'état passant R_{dson} et capable de supporter des tensions importantes (supérieures à 1000 V), comme par exemple du nitrure de gallium (GaN).

Un but de l'invention est donc de concevoir un dispositif de commande variable qui utilise des transistors JFET normalement passants, de façon à notamment minimiser la consommation électrique et augmenter leur efficacité énergétique, mais qui néanmoins ne présente pas de problèmes de fonctionnement ou de sécurité en l'absence d'alimentation ou de signal de commande.

Un autre but de l'invention est d'augmenter la fiabilité et la durée de vie des gradateurs ou dimmers en utilisant des transistors de puissance en carbure de silicium (SiC) car la technologie en carbure de silicium (SiC) est plus robuste que la technologie en silicium (Si), notamment pour la tenue en température et la tenue aux surtensions.

Un autre but de l'invention est de concevoir un dispositif de commande autonome ne nécessitant pas d'autre source d'énergie que la phase du réseau électrique alternatif à laquelle il est raccordé.

Pour cela, l'invention décrit un dispositif de commande variable connecté en série avec une charge électrique à commander sur une phase d'un réseau électrique alternatif. Le dispositif de commande comporte deux interrupteurs de puissance, de type JFET normalement passant, dont les grilles sont connectées entre elles, deux résistances de polarisation, chaque résistance de polarisation étant reliée respectivement entre la grille et la source d'un des interrupteurs de puissance, deux interrupteurs de commande commandés par un signal de commande commun, chaque interrupteur de commande étant respectivement connecté en parallèle d'une des résistances de polarisation.

Selon une caractéristique, les interrupteurs de puissance sont des JFET en carbure de silicium ou en nitrure de gallium.

Selon une caractéristique, le dispositif de commande variable comprend également un condensateur de réserve d'énergie et un circuit de charge du condensateur, le condensateur ayant une première extrémité reliée aux grilles des interrupteurs de puissance. Ce condensateur sert à alimenter le circuit électronique délivrant le signal de commande, ce qui rend le dispositif de commande variable complètement autonome.

Selon une autre caractéristique, les interrupteurs de commande sont des transistors de type MOSFET dont les sources sont connectées entre elles et aux grilles des interrupteurs de puissance et dont les drains sont reliés à la source d'un interrupteur de puissance correspondant. Alternativement, les interrupteurs de commande sont des microactionneurs de type MEMS dont la bobine est alimentée par le signal de commande.

Grâce à une plus faible dissipation thermique des transistors de puissance, l'invention permettra avantageusement de réduire le volume d'un gradateur ou dimmer comportant un tel dispositif de commande (plus grande miniaturisation) mais permettra également de commander des charges plus importantes avec un dispositif de volume identique.

D'autres caractéristiques et avantages vont apparaître dans la description détaillée qui suit en se référant à un mode de réalisation donné à titre d'exemple et représenté par les dessins annexés sur lesquels :
- la figure 1 représente un premier mode de réalisation simple d'un dispositif de commande variable conforme à l'invention,
- la figure 2 représente un second mode de réalisation d'un dispositif de commande variable conforme à l'invention,
- les figures 3, 4 & 5 schématisent le passage du courant dans le dispositif de la figure 2 durant différentes phases de fonctionnement.

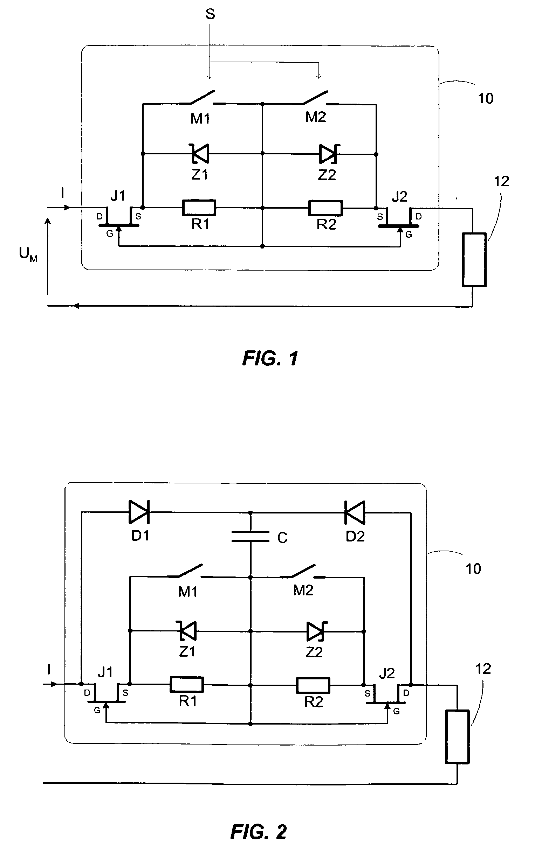

En référence à la figure 1, un dispositif de commande variable 10 est destiné à commander avec une tension variable une charge électrique 12, à partir d'un signal de commande S. Le dispositif de commande 10 est connecté en série avec la charge 12 à une seule phase d'un réseau électrique alternatif délivrant une tension U_{M} et n'a pas besoin d'être relié au neutre du réseau électrique, ce qui rend son utilisation très facile et simple dans une application domotique par exemple. Un tel dispositif est particulièrement adapté pour une application dans un gradateur de type dimmer destiné à la commande d'une charge électrique, telle qu'une lampe (par exemple alimentée par un réseau de 230V et d'une puissance inférieure ou égale à 1000W).

Le dispositif de commande 10 comporte deux interrupteurs de puissance J1 et J2 qui sont des transistors à effet de champ de type JFET normalement passant ("normally ON"). Préférentiellement, les deux interrupteurs de puissance J1 et J2 sont réalisés en carbure de silicium, mais on pourrait aussi utiliser d'autres matériaux grand gap, tel que du nitrure de gallium. Dans les exemples montrés, les interrupteurs de puissance J1 et J2 sont des JFET à canal N.

Le dispositif de commande 10 comporte aussi deux résistances de polarisation R1 et R2 et deux interrupteurs de commande M1 et M2.

Les interrupteurs de puissance J1, J2 ont leur Grille G qui sont reliées entre elles. Les interrupteurs J1, J2 sont montés tête-bêche en série avec la charge 12 de telle sorte que le Drain D de l'interrupteur J1 soit relié au réseau alternatif, le Drain D de l'interrupteur J2 soit relié à une extrémité de la charge 12, et les Sources S des interrupteurs J1, J2 soient reliées ensemble au travers des résistances de polarisation R1, R2. Chaque résistance R1, respectivement R2, est donc connectée entre la Grille et la Source d'un interrupteur de puissance J1, respectivement J2. De préférence, les Interrupteurs J1 et J2, de même que les résistances R1 et R2 sont identiques.

Chaque interrupteur de commande M1, respectivement M2, est connecté en parallèle d'une des résistances de polarisation R1, respectivement R2. Les interrupteurs de commande M1, M2 peuvent être des composants électromécaniques, tels que des mini-relais ou des MEMS (Micro Electro Mechanical Switch), ou préférentiellement des composants électroniques semi-conducteurs tels que des transistors MOSFET basse tension. Dans le cas de composants électromécaniques, le signal de commande S est relié aux bobines d'excitation de M1 et M2. Dans le cas de composants électroniques semi-conducteurs, le signal de commande S est relié aux Grilles des composants M1 et M2, via une résistance de grille.

Le dispositif de commande 10 peut également comporter deux diodes Zener de protection Z1 et Z2 identiques qui sont connectées en parallèle des résistances de polarisation R1 et R2. La cathode de Z1, respectivement Z2, est reliée à la Source de l'interrupteur J1, respectivement J2, et l'anode de Z1, respectivement Z2, est reliée à la Grille de l'interrupteur J1, respectivement J2. Ces diodes Zener protègent les interrupteurs JFET car elles permettent de toujours limiter les tensions Grille - Source V_{GS} entre leur tension zener V_{Z} (ou tension de claquage) dans un sens (de l'ordre de par exemple -15 V) et leur chute de tension directe dans l'autre sens (par exemple +0,7 V).

Le fonctionnement du mode de réalisation de la figure 1 est le suivant :
a. On suppose au départ que la tension réseau U_{M} est nulle, donc les tensions entre Grille et Source V_{GS1}, respectivement V_{GS2}, des interrupteurs JFET J1, respectivement J2, sont nulles, ce qui fait que ceux-ci sont fermés, car les interrupteurs J1 et J2 sont de type normalement passant. On suppose également qu'il n'y a pas de signal de commande S et donc que les interrupteurs de commande M1, M2 sont à l'état ouvert (non-passant).
b. Lors de l'apparition d'une tension réseau U_{M}, par exemple une arche dite positive, un courant I commence à circuler dans J1, R1, R2, J2 dans le sens indiqué par la flèche I sur la figure 1. Ce courant I génère très rapidement une tension V_{R1} positive aux bornes de la résistance R1. Comme V_{R1} = -V_{GS1} par construction, la tension V_{R1} positive crée une tension V_{GS1} négative entre Grille et Source de l'interrupteur JFET J1. La valeur de R1 est choisie de façon à ce que V_{GS1} atteigne rapidement la tension de blocage (ou tension de pincement) V_{P} permettant de faire basculer l'interrupteur JFET J1 à l'état ouvert (non-passant). Le courant traversant R1 chute alors jusqu'à ce que V_{GS1} repasse au-dessus de la tension de blocage V_{P}, ce qui rend l'interrupteur JFET J1 de nouveau légèrement passant. Le courant I va donc réaugmenter jusqu'à ce que V_{R1} atteigne de nouveau la tension de blocage V_{P} de façon à rebloquer J1, et ainsi de suite. Durant cette arche positive, l'interrupteur JFET J1 est monté en source de courant, le courant étant ainsi fixé par la résistance R1 et la tension de blocage V_{P}.

Ainsi, l'agencement de J1 et R1 fait que durant une arche positive, le courant I est inférieur ou égal à un courant résiduel de valeur très faible Iₘᵢₙ, très insuffisant pour alimenter correctement la charge 12, en particulier insuffisant pour allumer une lampe. Par exemple, si R1 = 10 KΩ et si V_{P} = -10 V, alors Iₘᵢₙ = 1 mA.

Par ailleurs, durant cette arche positive, la diode Zener Z1 est bloquée et la diode Zener Z2 est passante. La tension V_{Z2} aux bornes de Z2 est donc égale à la chute de tension directe d'une diode Zener (généralement de l'ordre de 0,7 V), ce qui permet de limiter la tension V_{R2} aux bornes de R2 et donc de limiter la valeur positive de la tension V_{GS2}, de façon à éviter des problèmes de Grille pour l'interrupteur J2.
c. Durant l'arche suivante négative, le courant I change de sens et le fonctionnement est similaire à celui décrit ci-dessus avec la résistance R2 et l'interrupteur JFET J2. Le courant I circulant en sens négatif entraîne très rapidement une tension V_{R2} positive aux bornes de la résistance R2. Comme V_{R2} = -V_{GS2} par construction, la tension V_{R2} positive crée une tension V_{GS2} négative entre Grille et Source de l'interrupteur JFET J2. La valeur de R2 est choisie de façon à ce que V_{CS2} atteigne rapidement la tension de blocage V_{P} permettant de faire basculer l'interrupteur JFET J2 à l'état ouvert (non-passant). Durant cette arche négative, l'interrupteur JFET J2 est monté en source de courant, le courant étant ainsi fixé par la résistance R2 et la tension de blocage V_{P}.

Ainsi, en l'absence de signal de commande S, le courant I circulant dans la charge 12 reste en permanence inférieur ou égal à Iₘᵢₙ, ce qui permet d'assurer en toute sécurité que, malgré l'utilisation d'interrupteurs de puissance normalement passants, la charge électrique n'est pas commandée en l'absence de signal de commande S.
d. Lors de l'apparition d'un signal de commande S, les interrupteurs de commande M1 et M2 se ferment, ce qui a pour effet de shunter les résistances R1 et R2. Les tensions V_{R1}, V_{R2} deviennent donc pratiquement nulles (de l'ordre de quelques dizaine de millivolts seulement), car V_{R1} = R_{onM1} * I, dans lequel R_{onM1} est la résistance à l'état passant du transistor MOSFET M1 basse tension qui est très faible et I est le courant circulant dans la charge 12. Ceci a pour conséquence de forcer également les tensions Grille-Source V_{GS1} et V_{CS2} des interrupteurs J1 et J2 à zéro. Les interrupteurs J1 et J2 deviennent alors tous les deux passants et la charge électrique 12 est alimentée, quelque soit le sens du courant I.

Selon le mode de réalisation préféré décrit dans la figure 2, le dispositif de commande 10 comporte en outre un condensateur C de réserve d'énergie associé à un circuit de charge du condensateur. Le condensateur C possède une première extrémité qui est reliée aux Grilles des interrupteurs de puissance J1 et J2. Le circuit de charge du condensateur C comporte deux diodes de charge D1 et D2, la cathode de chaque diode D1, respectivement D2, étant reliée à une seconde extrémité du condensateur C, tandis que l'anode de chaque diode D1, respectivement D2, est reliée au Drain d'un interrupteur de puissance J1, respectivement J2. De plus, le courant de charge du condensateur C peut être limité par une éventuelle résistance additionnelle R_{A} (non représentée sur les figures) placée dans le circuit de charge en série avec les diodes D1 et D2.

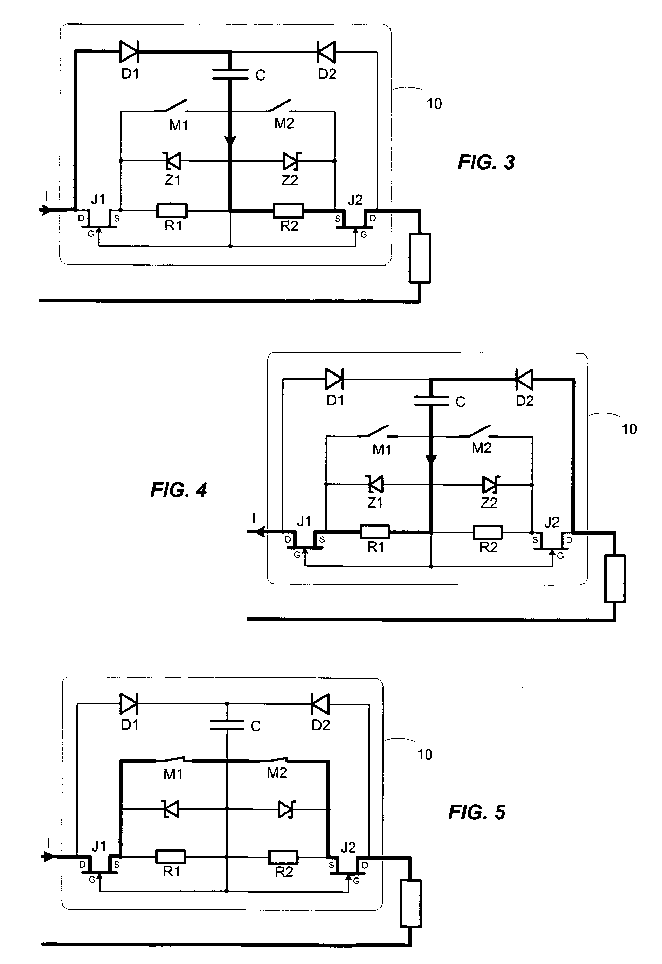

Le fonctionnement du mode de réalisation de la figure 2 est alors le suivant (voir figures 3, 4 et 5) :
a. On suppose au départ que la tension réseau U_{M} est nulle, donc les tensions entre Grille et Source V_{GS1}, respectivement V_{GS2}, des interrupteurs JFET J1, respectivement J2, sont nulles, ce qui fait que ceux-ci sont potentiellement passants. On suppose également qu'il n'y a pas de signal de commande S et donc que les interrupteurs de commande M1, M2 sont à l'état ouvert (non-passant).
b. Lors de l'apparition d'une tension réseau U_{M}, un courant I commence à circuler dans J1, R1, R2, J2 dans le sens indiqué par la flèche 1 sur la figure 3 (arche positive). Ce courant génère très rapidement une tension V_{R1} positive aux bornes de la résistance R1. Comme V_{R1} = -V_{GS1} par construction, la tension V_{R1} positive impose une tension V_{GS1} négative entre Grille et Source de l'interrupteur JFET J1. La valeur de R1 est choisie de façon à ce que V_{GS1} atteigne rapidement la tension de blocage V_{P} permettant de faire basculer l'interrupteur JFET J1 à l'état ouvert (non-passant). Ainsi, comme pour le fonctionnement de la figure 1, le courant circulant dans J1 est inférieur ou égal à un courant résiduel de valeur très faible Iₘᵢₙ. Par contre, durant l'arche de courant positive, la diode D1 est passante et la diode D2 est bloquée. Le courant I est donc dérivé par la diode D1 et vient charger le condensateur C. Le courant I circule ensuite dans R2, ce qui impose une tension V_{GS2} positive entre Grille et Source de l'interrupteur JFET J2. J2 devient alors passant tant que le condensateur C n'est pas complètement chargé. Volontairement, le courant de charge du condensateur C est limité par la résistance R2, ainsi que par l'éventuelle résistance additionnelle R_{A} (non représentée sur les figures) placée dans le circuit de charge, afin que la charge électrique 12 soit parcourue seulement par un faible courant et qu'aucune tension significative n'apparaisse à ces bornes.
c. Durant l'arche suivante négative, le courant I change de sens et le fonctionnement est similaire à celui décrit ci-dessus avec la résistance R2 et l'interrupteur JFET J2 (voir figure 4). Le courant I circulant en sens négatif entraîne très rapidement une tension V_{R2} positive aux bornes de la résistance R2. Comme V_{R2} = -V_{GS2} par construction, la tension V_{R2} positive crée une tension V_{GS2} négative qui bloque l'interrupteur JFET J2. La diode D2 est passante et la diode D1 est bloquée. Le courant I est donc dérivé par la diode D2 et vient charger le condensateur C. Le courant circule ensuite dans R1, ce qui impose une tension V_{GS1} positive entre Grille et Source de l'interrupteur JFET J1. J1 devient alors passant tant que le condensateur C n'est pas complètement chargé.

Ainsi, les phases b. et c. décrites ci-dessus permettent de charger le condensateur C car le courant I traverse C toujours dans le même sens. Lorsque la charge du condensateur C est terminée, la tension aux bornes du condensateur C ne varie plus et se stabilise à une valeur proche de la tension crête du réseau d'alimentation U_{M}.
d. Lors de l'apparition d'un signal de commande S, les interrupteurs de commande M1 et M2 se ferment (voir figure 5), ce qui a pour conséquence de shunter les résistances R1 et R2. Les tensions V_{R1} et V_{R2} deviennent donc nulles, ce qui en conséquence force également les tensions Grille-Source V_{GS1} et V_{GS2} des interrupteurs J1 et J2 à zéro. Les interrupteurs J1 et J2 deviennent alors tous les deux passants et la charge électrique 12 est alimentée, quel que soit le sens du courant I.

Le dispositif, de commande variable comporte également un circuit électronique de commande (non représenté sur les figures) destiné à délivrer le signal de commande S commun à partir d'un ordre provenant par exemple d'un bouton à plusieurs positions dans le cas d'un dimmer, ou provenant de tout autre organe extérieur. De façon classique, pour fournir une tension variable à la charge électrique 12, le signal de commande S peut être présent sur une partie seulement de chaque arche de l'alimentation U_{M}.

Grâce à l'invention, ce circuit électronique de commande est alimenté avantageusement par le condensateur C de réserve d'énergie, qui fournit une source d'énergie à un module d'alimentation (de type Fly-back ou SMPS) du circuit électronique de commande. Ainsi, le dispositif de commande variable est complètement autonome et ne requiert aucune source d'énergie (de type pile ou batterie) pour fonctionner, autre que la phase du réseau d'alimentation alternatif U_{M} de la charge électrique 12. De même, le dispositif ne nécessite pas un raccordement entre phase et neutre du d'alimentation réseau alternatif. Comme indiqué dans le fonctionnement ci-dessus, le condensateur C est rechargé dès l'apparition d'une tension d'alimentation U_{M} du réseau alternatif. En pratique, il suffit de quelques alternances pour charger le condensateur C, car le circuit électronique de commande ne consomme pas beaucoup d'énergie (de l'ordre de 1 W seulement).

Cependant, au cas où le signal de commande S est présent en permanence (phase n° d. du fonctionnement ci-dessus - figure 5), le condensateur C n'est plus alimenté et pourrait donc se décharger au bout d'une longue durée. C'est pourquoi l'invention prévoit que périodiquement (par exemple à chaque alternance du courant I), le signal de commande S est absent pendant un court instant, de façon à ouvrir les interrupteurs de commande M1 et M2 pendant ce court instant pour maintenir la charge du condensateur C (phases b. et c. du fonctionnement ci-dessus). Ce court instant est déterminé pour ne pas nuire au fonctionnement de la charge électrique 12, en particulier pour ne pas générer une baisse perceptible de l'intensité de la ou des lampes commandées.

L'invention permet d'utiliser des interrupteurs de commande M1, M2 réalisés avec des transistors MOSFET basse tension, c'est-à-dire actuellement de tension inférieure à 60 V, qui présentent l'avantage d'avoir une très faible résistance à l'état passant, de l'ordre de quelques milliohms seulement. En effet, lorsque l'on coupe le signal de commande S pour ouvrir M1 et M2, la tension V_{DS} apparaissant entre la Source et le Drain des interrupteurs M1 et M2 est toujours égale aux tensions aux bornes des résistances R1 et R2, elles-mêmes imposées par les tensions de pincement V_{P} des JFET J1 et J2. En cas de pointe de courant au démarrage, la tension V_{DS} est limitée par les diodes Zener Z1 et Z2 à une valeur maximale de l'ordre de par exemple 15 à 20V, et non pas à la tension crête du réseau alternatif U_{M} 230 V.

Le fait de pouvoir utiliser de tels transistors MOSFET basse tension permet alors de diminuer fortement la dissipation thermique et d'offrir une plus grande possibilité de miniaturisation du dimmer. Cet avantage se retrouve aussi lorsque les interrupteurs de commande M1, M2 sont des interrupteurs électromécaniques de type MEMS, car leur résistance à l'état passant est également très faible.

## Revendications

1. Dispositif de commande variable connectable en série avec une charge électrique (12) à commander sur une phase d'un réseau électrique alternatif, le dispositif de commande comportant
- deux interrupteurs de puissance (J1, J2), de type JFET de type normalement passant, dont les grilles sont connectées entre elles et qui sont montés tête-bêche en série avec la charge (12), de sorte que le drain d'un des interrupteurs de puissance (J1) est relié au réseau électrique alternatif et que le drain de l'autre interrupteur de puissance (J2) est relié à une extrémité de la charge (12), **caractérisé en ce que** le dispositif de commande (10) comporte:
- deux résistances de polarisation (R1, R2), chaque résistance de polarisation étant reliée respectivement entre la grille et la source d'un des interrupteurs de puissance (J1, J2), les sources des interrupteurs de puissance (J1, J2) étant reliées ensemble au travers des résistances de polarisation (R1, R2),
- deux interrupteurs de commande (M1, M2) commandés par un signal de commande commun (S), chaque interrupteur de commande étant respectivement connecté en parallèle d'une des résistances de polarisation (R1, R2).

2. Dispositif de commande variable selon la revendication 1, **caractérisé en ce que** les interrupteurs de puissance (J1, J2) sont des JFET en carbure de silicium.

3. Dispositif de commande variable selon la revendication 1, **caractérisé en ce que** les interrupteurs de puissance (J1, J2) sont des JFET en nitrure de gallium.

4. Dispositif de commande variable selon la revendication 1, **caractérisé en ce que** le dispositif de commande (10) comprend également un condensateur de réserve d'énergie (C) et un circuit de charge du condensateur, le condensateur (C) ayant une première extrémité reliée aux grilles des interrupteurs de puissance (J1, J2).

5. Dispositif de commande variable selon la revendication 4, **caractérisé en ce que** le circuit de charge comporte deux diodes (D1, D2), la cathode de chaque diode étant reliée à une seconde extrémité du condensateur (C) et l'anode de chaque diode étant respectivement reliée au drain d'un des interrupteurs de puissance (J1, J2).

6. Dispositif de commande variable selon la revendication 4, **caractérisé en ce que** le dispositif (10) comporte également un circuit électronique de commande qui délivre le signal de commande commun (S) et qui est alimenté par le condensateur de réserve d'énergie (C).

7. Dispositif de commande variable selon la revendication 1, **caractérisé en ce que** les interrupteurs de commande (M1, M2) sont des transistors de type MOSFET dont les sources sont connectées entre elles et aux grilles des interrupteurs de puissance (J1, J2) et dont les drains sont reliés à la source d'un interrupteur de puissance correspondant (J1, J2).

8. Dispositif de commande variable selon la revendication 7, **caractérisé en ce que** la grille de chaque transistor MOSFET (M1, M2) est connectée au signal de commande (S) via une résistance de grille.

9. Dispositif de commande variable selon la revendication 1, **caractérisé en ce que** les interrupteurs de commande (M1, M2) sont des microactionneurs de type MEMS dont la bobine est alimentée par le signal de commande (S).

10. Dispositif de commande variable selon la revendication 1, **caractérisé en ce que** le dispositif (10) comporte deux diodes Zener de limitation (Z1, Z2) connectées en parallèle des résistances de polarisation (R1, R2).

11. Gradateur destiné à la commande d'une charge électrique (12), **caractérisé en ce qu'**il comporte un dispositif de commande variable selon l'une des revendications précédentes.

## Claims

1. Variable control device in series with an electrical connectable load (12) to be controlled on one phase of an alternating electrical network, the control device comprising:
- two JFET power switches (J1, J2) of the normally ON type, whose gates are connected together, and that are mounted head to tail in series with the load (12), in such a manner that the drain of one of the power switches (J1) is connected to the electrical network and the drain of the other power switch (J2) is connected to one extremity of the load (12),
**characterized in that** the control device (10) comprises:
- two polarization resistances (R1, R2), each polarization resistance being respectively connected between the gate and the source of one of the power switches (J1, J2), the sources of the power switches (J1, J2) being linked together through the polarization resistances (R1, R2),
- two control switches (M1, M2) controlled by a common control signal (S), each control switch being respectively connected in parallel with one of the polarization resistances (R1, R2).

2. Variable control device according to claim 1, **characterized in that** the power switches (J1, J2) are silicon carbide JFET transistors.

3. Variable control device according to claim 1, **characterized in that** the power switches (J1, J2) are gallium nitride JFET transistors.

4. Variable control device according to claim 1, **characterized in that** the control device (10) also comprises a back-up energy capacitor (C) and a charging circuit of the capacitor, the capacitor (C) having a first extremity connected to the gates of the power switches (J1, J2).

5. Variable control device according to claim 4, **characterized in that** the charging circuit comprises two diodes (D1, D2), the cathode of each diode being connected to one second extremity of the capacitor (C) and the anode of each diode being respectively connected to the drain of one of the power switches (J1, J2).

6. Variable control device according to claim 4, **characterized in that** the control device (10) also comprises an electronic control circuit which delivers the common control signal (S) and which is powered by the back-up energy capacitor (C).

7. Variable control device according to claim 1, **characterized in that** the control switches (M1, M2) are MOSFET transistors whose sources are connected together and to the gates of the power switches (J1, J2), and whose drains are connected to the source of a corresponding power switch (J1, J2).

8. Variable control device according to claim 7, **characterized in that** the gate of each MOSFET transistor (M1, M2) is connected to the control signal (S) via a gate resistance.

9. Variable control device according to claim 1, **characterized in that** the control switches (M1, M2) are MEMS microactuators whose coil is powered by the control signal (S).

10. Variable control device according to claim 1, **characterized in that** the control device (10) comprises two limitation zener diodes (Z1, Z2) connected in parallel with the polarization resistances (R1, R2).

11. Power controller intended for controlling an electrical load (12), **characterized in that** it comprises a variable control device according to one of the preceding claims.

## Patentansprüche

1. Vorrichtung für variable Steuerung, die mit einer elektrischen Last (12) in Reihe geschaltet werden kann, die auf einer Phase eines Wechselstromnetzes gesteuert werden soll, wobei die Steuervorrichtung Folgendes umfasst:
- zwei Leistungsschalter (J1, J2) des JFET-Typs des normalerweise durchschaltenden Typs, deren Gates miteinander verbunden sind und die zueinander entgegengesetzt in Reihe mit der Last (12) geschaltet sind, derart, dass der Drain eines der Leistungsschalter (J1) mit dem Wechselstromnetz verbunden ist und dass der Drain das anderen Leistungsschalters (J2) mit einem Ende der Last (12) verbunden ist,
**dadurch gekennzeichnet, dass** die Steuervorrichtung (10) umfasst:
- zwei Vorspannungswiderstände (R1, R2), wobei jeder Vorspannungswiderstand zwischen das jeweilige Gate und die jeweilige Source eines der Leistungsschalter (J1, J2) geschaltet ist, wobei die Sources der Leistungsschalter (J1, J2) über die Vorspannungswiderstände (R1, R2) miteinander verbunden sind,
- zwei Steuerschalter (M1, M2), die durch ein gemeinsames Steuersignal (S) gesteuert werden, wobei jeder Steuerschalter jeweils zu einem der Vorspannungswiderstände (R1, R2) parallelgeschaltet ist.

2. Vorrichtung für variable Steuerung nach Anspruch 1, **dadurch gekennzeichnet, dass** die Leistungsschalter (J1, J2) JFETs aus Siliciumkohlenstoff sind.

3. Vorrichtung für variable Steuerung nach Anspruch 1, **dadurch gekennzeichnet, dass** die Leistungsschalter (J1, J2) JFETs aus Galliumnitrid sind.

4. Vorrichtung für variable Steuerung nach Anspruch 1, **dadurch gekennzeichnet, dass** die Steuervorrichtung (10) außerdem einen Energiebevorratungskondensator (C) und eine Ladeschaltung des Kondensators umfasst, wobei der Kondensator (C) mit einem ersten Ende mit den Gates der Leistungsschalter (J1, J2) verbunden ist.

5. Vorrichtung für variable Steuerung nach Anspruch 4, **dadurch gekennzeichnet, dass** die Ladeschaltung zwei Dioden (D1, D2) umfasst, wobei die Katode jeder Diode mit einem zweiten Ende des Kondensators (C) verbunden ist und die Anode jeder Diode jeweils mit dem Drain eines der Leistungsschalter (J1, J2) verbunden ist.

6. Vorrichtung für variable Steuerung nach Anspruch 4, **dadurch gekennzeichnet, dass** die Vorrichtung (10) außerdem eine elektronische Steuerschaltung umfasst, die das gemeinsame Steuersignal (S) liefert und die durch den Energiebevorratungskondensator (C) versorgt wird.

7. Vorrichtung für variable Steuerung nach Anspruch 1, **dadurch gekennzeichnet, dass** die Steuerschalter (M1, M2) Transistoren des MOSFET-Typs sind, deren Sources miteinander und mit den Gates der Leistungsschalter (J1, J2) verbunden sind und deren Drains mit der Source eines entsprechenden Leistungsschalters (J1, J2) verbunden sind.

8. Vorrichtung für variable Steuerung nach Anspruch 7, **dadurch gekennzeichnet, dass** das Gate jedes MOSFET-Transistor (M1, M2) mit dem Steuersignal (S) über einen Gate-Widerstand verbunden ist.

9. Vorrichtung für variable Steuerung nach Anspruch 1, **dadurch gekennzeichnet, dass** die Steuerschalter (M1, M2) Mikroaktoren des MEMS-Typs sind, deren Spule durch das Steuersignal (S) versorgt wird.

10. Vorrichtung für variable Steuerung nach Anspruch 1, **dadurch gekennzeichnet, dass** die Vorrichtung (10) zwei Begrenzungs-Zener-Dioden (Z1, Z2) umfasst, die mit den Vorspannungswiderständen (R1, R2) parallelgeschaltet sind.

11. Dämpfungsvorrichtung, die für die Steuerung einer elektrischen Last (12) bestimmt ist, **dadurch gekennzeichnet, dass** sie eine Vorrichtung für variable Steuerung nach einem der vorhergehenden Ansprüche enthält.
